# EUROPÄISCHE PATENTSCHRIFT

(11) **EP 2 199 762 B1**
(45) Veröffentlichungstag und Bekanntmachung des Hinweises auf die Patenterteilung: **23.02.2011**
(21) Anmeldenummer: 08106017.0
(22) Anmeldetag: 19.12.2008
(51) Int. Cl.: G01F 23/284

(54) **Sensor und Verfahren zur Messung der Entfernung einer Grenzfläche**
Sensor and method for monitoring the distance of a boundary area
Capteur et procédé de mesure de l'éloignement d'une surface limite

(43) Veröffentlichungstag der Anmeldung: 23.06.2010
(73) Patentinhaber: SICK AG, 79183 Waldkirch (DE)
(72) Erfinder: Weber, Thomas, 77960 Seelbach (DE); Blöhbaum, Frank, 79112 Freiburg (DE); Heidepriem, Sebastian, 79359 Riegel (DE); Heizmann, Reinhard, 79286 Glottertal (DE)
(74) Vertreter: Hehl, Ulrich

(56) Entgegenhaltungen:
- DE-A1-102005 021 358
- GB-A- 2 350 004
- US-B1- 6 628 229

## Beschreibung

Die Erfindung betrifft einen Sensor und ein Verfahren zur Messung der Entfernung einer Grenzfläche gemäß den Oberbegriffen von Anspruch 1 beziehungsweise 9.

Es ist aus vielen Anwendungen bekannt, den Abstand zu einer Grenzfläche aus der Laufzeit eines Mikrowellensignals zu bestimmen. Eine Möglichkeit ist, das Signal frei abzustrahlen, wie dies beim Radar geschieht. Wegen der unkontrollierten Wellenausbreitung wird häufig das TDR-Messprinzip (time domain reflectometry) bevorzugt. Es basiert auf der Bestimmung von Laufzeiten eines elektromagnetischen Signals, um den Abstand einer Diskontinuität des Leitungswellenwiderstandes wie etwa eines Kabelbruchs oder einer Grenzfläche zwischen zwei Medien zu ermitteln. Der Unterschied zum Radar besteht darin, dass die elektromagnetischen Wellen nicht ins Freie abgestrahlt, sondern entlang eines Leiters geführt werden. Eine der ältesten Anwendungen des TDR-Prinzips ist die Lokalisierung von Brüchen in Überseeleitungen. Man kann TDR ebenso nutzen, um Füllstände in einem Behälter zu bestimmen, Leitungen in elektronischen Schaltungen zu testen oder um für Bauplanung oder Landwirtschaft den Feuchtigkeitsgehalt des Erdbodens in bestimmten Tiefen zu bestimmen.

Bei einer TDR-Messung wird ein sehr kurzer elektrischer Sendeimpuls in den Leiter eingespeist und durchläuft ihn in Richtung des gegenüberliegenden Endes. Trifft der Impuls auf eine Störstelle, was gleichbedeutend mit einer Änderungen des örtlichen Wellenwiderstand ist, wird ein Teil der Sendeenergie zum Leitungseingang zurückreflektiert. Aus der Laufzeit zwischen dem Aussenden des Sendeimpulses und dem Empfang der Reflexion lässt sich die Position der Störstelle ortsgenau errechnen. Für Anwendungen zur Füllstandsmessung ist der Leiter als Monosonde oder Koaxialsonde ausgebildet, welche senkrecht oder schräg in den Tank eingeführt wird und möglichst dicht bis zum Boden reicht, um den vollen Messbereich abzudecken.

Um den Empfangszeitpunkt genau bestimmen zu können, wird der Verlauf des Empfangssignals abgetastet und einer digitalen Auswertung zugeführt. Da die Pulsbreite in der Größenordnung von nur einigen hundert Pikosekunden liegt, müsste ein A/D-Wandler im hohen Gigahertzbereich arbeiten, um den Pulsverlauf aufzulösen. Derartige Bauteile sind unverhältnismäßig teuer.

Daher wird eine Zeitdehnung vorgenommen. Das Signal wird wiederholt gesendet und empfangen, und jedes einzelne Empfangssignal wird mit einer geringen Auflösung digitalisiert, praktisch meist nur einem einzigen Abtastpunkt je Wiederholung. Damit dieses Undersampling dennoch die Signalform hinreichend aufgelöst wiedergibt, wird der Abtastpunkt mit jeder Wiederholung um ein kleines Offset verschoben.

In der Einleitung der US 2007/0192391 A1 ist beschrieben, wie für eine herkömmliche Zeitdehnung ein derartiges kleines Offset für das Undersampling erzeugt wird. Bei einer Sendefrequenz von 2 MHz und einer Abtastfrequenz von 1,99999 MHz beträgt die Offsetfrequenz 10 Hz, und damit verschiebt sich der Abtastzeitpunkt über eine Periode von 100 Millisekunden linear und regelmäßig gegenüber dem Sendezeitpunkt in einem der geringen Differenzperiode entsprechenden feinen Zeitraster mit einem Zeitdehnungsfaktor von 200.000. Der Abtasttakt wird dabei mittels einer PLL (Phase-locked Loop) an den Sendetakt gekoppelt.

Der Nachteil dieses herkömmlichen Ansatzes ist die lange Synchronisierungsperiode der PLL von mindestens 100 Millisekunden. Die kleine Bandbreite der Regeldynamik macht es der PLL unmöglich, schnell genug auf Störungen der Oszillatoren beispielsweise durch elektromagnetische Störstrahlung (EMV) zu reagieren, die PLL-Strukturen haben ein zu hohes Phasenrauschen. Die Folge sind entweder unter Störeinfluss erheblich beeinträchtigte Messgenauigkeiten durch Jitter der Abtaststützstellen oder zusätzliche Kosten für Maßnahmen zur EMV-Abschirmung.

Die Lösung der US 2007/0192391 A1 ist, das kleine Frequenzoffset mittels direkter digitaler Synthese (DDS) einzustellen. Damit ist zwar eine größere Störfestigkeit erreicht, und auch die Regeldynamik der durch den DDS-Baustein ersetzten PLL spielt keine Rolle mehr. Gerade der erforderliche DDS-Baustein ist aber gleichzeitig der Nachteil, denn er muss sehr kleine Zeitdifferenzen bereitstellen, also eine hohe Phasenauflösung haben, um verlässlich die Stützstellen für das Undersampling-Verfahren zu liefern. Ein derart hochauflösender DDS-Baustein treibt die Herstellungskosten erheblich in die Höhe.

Sämtliche beschriebenen Ansätze mit kleinem Frequenzoffset haben einen weiteren Nachteil deshalb, weil die Zeitintervalle zwischen Sendezeitpunkt und Abtastzeitpunkt monoton und linear anwachsen, bis sie am Ende der Periode der Zwischenfrequenz wieder aufeinanderfallen. Dies ist sehr unflexibel und lässt keinen Spielraum für Erweiterungen, die darauf aufsetzen, von dem starren Anwachsen der Zeitintervalle abzuweichen.

Aus der DE 10 2005 021 358 A1 ist ein Laufzeitmessverfahren zur Ermittlung der Distanz bekannt. Dabei wird periodisch ein Sendesignal mit einer Pulsrepetierfrequenz ausgesandt und durch ein mit einer Abtastfrequenz erzeugtes Abtastsignal in ein zeitgedehntes Zwischenfrequenzsignal transformiert. Das Messsignal wird mit einem Bandpassfilter hoher Güte gefiltert. Statt nun einen Bandpassfilter mit einer an die Zwischenfrequenz angepassten Mittenfrequenz zu wählen, sieht die DE 10 2005 021 358 A1 umgekehrt vor, die Zwischenfrequenz an den Bandpassfilter anzupassen, indem Pulsrepetierfrequenz und/oder Abtastfrequenz insbesondere iterativ variiert werden. In einer Ausführungsform sind digitale Sende- und Abtasttaktoszillatoren vorgesehen, welche als Phase-Locked-Loop aus einer hochkonstanten Vergleichsfrequenz mittels eines einstellbaren Teilers die stabile gewünschte Frequenz ableiten.

Die DE 199 49 992 A1 beschreibt ein Verfahren zur Erhöhung der Störfestigkeit eines Zeitbereichsreflektometers, welches Signale auf einer Wellenleitung mit einer Pulsrepetierfrequenz wiederholt aussendet und zur Zeitdehnung mit Abtastpulsen abtastet, die mit einer Abtastfrequenz wiederholt werden. Dabei wird aus den Messwerten ein Störmaß berechnet, und Pulsrepetierfrequenz und Abtastfrequenz werden verändert, um das Störmaß zu reduzieren.

Es ist daher Aufgabe der Erfindung, auf einfache Weise eine verbesserte Zeitdehnung mit stabilen Abtastzeitpunkten zu realisieren.

Diese Aufgabe wird durch einen Sensor gemäß Anspruch 1 sowie ein Verfahren zur Messung der Entfernung zu einer Grenzfläche gemäß Anspruch 9 gelöst.

Dabei geht die Erfindung von dem Prinzip aus, das erforderliche kleine Frequenzoffset bei möglichst hoher Differenzfrequenz zwischen Sende- und Abtastfrequenz zu erzeugen. Damit können zwei Frequenzen mit definiertem Frequenzunterschied stabil erzeugt werden. Gleiche relative Phasenlagen zwischen Sende- und Abtastfrequenz stellen sich bereits nach der Periode des Mastertakts ein, nicht erst nach beispielsweise 100 Millisekunden wie im Stand der Technik. Diese erheblich höhere Repetierrate gleicher Frequenzbedingungen ermöglicht zusätzliche Freiheitsgrade für den Sampler und für das Abtastverfahren. Außerdem ist durch die schnellere Rückkopplung das Zeitverhalten zwischen Senden und Abtasten stabilisiert und Jitter der Abtastpunkte deutlich reduziert. Die einleitend erläuterte Beeinträchtigung der Messgenauigkeit ist erfindungsgemäß vermieden. Die Erfindung hat außerdem den Vorteil, dass nahezu beliebige Zeitdehnungsfaktoren stabil realisierbar sind. Dabei können kostengünstige einfache Schaltungen oder sogar Softwarelösungen verwendet werden.

Die übliche Signalform ist ein sehr kurzer Puls mit einer Breite in der Größenordnung von einigen hundert Pikosekunden oder weniger, und deshalb wird in dieser Beschreibung oft vereinfachend von einem Puls gesprochen. Denkbar sind aber auch andere Signalformen, beispielsweise Mehrfachpulse oder auch stufenförmige Signale. Ein weiteres Beispiel für eine Signalform ist ein Hochfrequenzträger mit einer Amplitudenmodulation, beispielsweise in Form eines Bursts. Auch hier wird die Form der Hüllkurve in ähnlicher Weise zeitgedehnt abgetastet wie bei einem Pulsverfahren, wie dies etwa in der WO 2007/093270 A1 ausgeführt ist. Wichtig ist lediglich eine lokale Änderung der Signalform, um Sende- und Empfangszeitpunkt festlegen zu können. An der Problematik der Zeitdehnung ändert sich dabei deshalb nichts, weil der interessierende Effekt sich auch bei breiteren Signalen jeweils auf der genannten Zeitskala im Bereich von einigen hundert Pikosekunden abspielt.

Als Grenzfläche kommen Übergänge zwischen Medien mit unterschiedlicher Permittivität, beispielsweise Luft/Flüssigkeit oder die Grenzschicht zwischen zwei Fluiden in Betracht, aber auch Störungen oder Brüche in einem Leiter oder Änderungen des umgebenden Mediums, wie im Falle des Feuchtigkeitsgehalts von Erdboden.

Die Zeitbasiseinheit weist bevorzugt eine erste PLL mit einem ersten Teiler des Mastertaktes für die erste Frequenz und eine zweite PLL mit einem zweiten Teiler des Mastertaktes für die zweite Frequenz auf, wobei insbesondere der erste Teiler und der zweite Teiler so gewählt sind, dass eine möglichst kleine Differenzperiode im Bereich einiger hundert, einiger zehn oder einiger Pikosekunden entsteht. Sowohl die Sendezeitpunkte als auch die Abtastzeitpunkte sind somit durch jeweils eine PLL auf den Mastertakt gelockt und damit stabilisiert. Die hohe, durch den gemeinsamen Mastertakt wesentlich verbesserte Regelbandbreite dieser PLL-Struktur vermeidet ohne kostenintensive Schaltungen die einleitend beschriebenen Störungen.

Die Masterfrequenz ist bevorzugt größer als 500 kHz, liegt insbesondere im Bereich von 5 MHz bis 25 MHz, und der erste und der zweite Teiler liegen bevorzugt im Bereich zwischen 2 und 100, insbesondere zwischen 30 und 70. Eine hohe gemeinsame Grundfrequenz ermöglicht kurze Synchronisationsperioden, und die kleinen Teiler gegenüber herkömmlich erforderlichen Teilern im Bereich 10⁴ sorgen für eine schnelle Rückkoppelschleife in der PLL und verhindern damit ein Auseinanderlaufen der Frequenzen. Ein konkretes Zahlenbeispiel ist ein Mastertakt von 10 MHz und ein Teilerpaar 40/41. Je nach Stabilität der PLLs und Vorgaben der verwendeten digitalen Bausteine können andere Teiler und damit andere Einstellmöglichkeiten vorgesehen sein. Die beiden Teiler sollten untereinander teilerfremd sein, bevorzugt die Relation n und n+1 erfüllen. Eine nicht teilerfremde Wahl führt zu gleichen Abtastzeitpunkten, etwa bei 5 und 10, oder zu einem nicht optimalen Undersampling, etwa bei 42 und 40.

Sende- und Abtastfrequenz werden bevorzugt regelmäßig, insbesondere mit jeder Masterperiode auf den Mastertakt.synchronisiert. Durch den Bezug auf den einen stabilen Mastertaktgeber werden die PLLs schnell nachgeregelt, und die beiden Frequenzen können maximal über das kurze Synchronisationsfenster auseinanderlaufen. Dabei kann die Synchronisierung jedes Mal erfolgen, wenn die Perioden theoretisch zusammenfallen müssten, im Beispiel von 400 MHz und 410 MHz also alle 100 ns, oder nur jedes n-te Mal, also in Vielfachen von 100 ns.

Die Zeitbasiseinheit ist erfindungsgemäß dafür ausgebildet, beliebige zeitliche Verschiebungen zwischen Sendezeitpunkten und Abtastzeitpunkten mit einer durch die Differenzfrequenz gegebenen zeitlichen Auflösung zur Verfügung zu stellen. Hier wird also die Möglichkeit geschaffen, von der herkömmlichen starren, monoton und linear ansteigenden Frequenzverschiebung gezielt abzuweichen. Es wird also nicht lediglich die sich automatisch verschiebende Differenzperiode zweier leicht unterschiedlicher Frequenzen ausgenutzt. Es wird zusätzlich Buch geführt, in welcher Periode sich die beiden Frequenzen jeweils befinden, um damit beliebige Zeitintervalle auszukoppeln, deren Genauigkeit durch die Differenzperiode gegeben ist.

Es ist wichtig anzumerken, dass die höchstmögliche Auflösung, also der kleinste erzeugbare Zeitunterschied, nicht notwendig gleich der Differenzperiode ist. Bei einem Verhältnis der beiden Frequenzen von n/(n+1) ist dies der Fall, und ein solches Verhältnis ist auch bevorzugt. Das Beispiel anderer teilerfremder Zahlen wie etwa 3/8 zeigt, dass zwar die Differenzfrequenz 5 die Genauigkeit festlegt, aber nicht mit ihr identisch ist, denn auch in einem solchen System ist das kleinstmögliche zeitliche Offset 1. Nach entsprechender Sortierung sind sämtliche erforderlichen Offsets ebenso vorhanden wie im übersichtlicheren Fall n/(n+1). Bei dieser Betrachtung wurden die Einheiten herausgekürzt, die Überlegung ändert sich nicht, wenn man jede Zahl mit einer gemeinsamen Grundfrequenz beispielsweise von 10 MHz multipliziert.

Die Zeitbasiseinheit weist bevorzugt einen ersten Zähler und einen zweiten Zähler auf, um die vollständigen Perioden der ersten Frequenz beziehungsweise der zweiten Frequenz zu zählen, wobei die Zähler insbesondere getriggerte Schieberegister aufweisen, und weiterhin bevorzugt dafür ausgebildet ist, die zeitliche Verschiebung als Zeitintervall zwischen der n-ten Periode der ersten Frequenz und der m-ten Periode der zweiten Frequenz zu erzeugen. Ein Pärchen aus bestimmten Perioden der beiden Frequenzen liefert ein gewünschtes Zeitintervall mit der durch die Differenzperiode gegebenen Auflösung. Es genügt, wenn Pärchen verfügbar sind, um das Zeitintervall zwischen zwei Sendesignalen zu füllen, da größere Zeiten dann durch Addition von ganzen Wiederholungsperioden erzeugbar sind. Alternativ kann man aber auch Pärchen über eine Wiederholungsperiode hinaus auswerten. Mit jeder oder jeder n-ten Synchronisierung werden die Zähler dementsprechend zurückgesetzt.

Die Steuerung ist bevorzugt dafür ausgebildet, mehrfach nacheinander das Signal zu einem relativ zum Sendezeitpunkt gleichen Abtastzeitpunkt abzutasten. Dabei ist mit gleichem Abtastzeitpunkt natürlich nicht der absolut identische Zeitpunkt, sondern die gleiche Relativlage innerhalb eines Empfangssignals bei der nächsten Wiederholung des Sendens und Empfangens gemeint. Solche Mehrfachabtastungen wären herkömmlich gar nicht möglich, da eine gleiche Phasenlage erst wieder nach 100 ms vorliegt und damit die Ansprechzeit unvertretbar verlängert würde. Das durch das Frequenzoffset zeitgedehnte Signal kann für kostengünstige analoge Elemente wie Verstärker, Filter und auch den nachgelagerten A/D-Wandler zur eigentlichen Digitalisierung immer noch zu kurz sein. Die Mehrfachabtastung sorgt dann für eine zusätzliche Zeitdehnung. Zu beachten ist, dass das Frequenzspektrum durch eine Mehrfachabtastung verzerrt wird und man dies berücksichtigen und kompensieren sollte, beispielsweise durch einen analogen Tiefpassfilter oder digitale Filterung insbesondere mit Tiefpassverhaltung oder Amplitudenanpassung.

Die Steuerung und/oder die Zeitbasiseinheit ist bevorzugt auf einem digitalen Logikbaustein, insbesondere einem FPGA (Field Progammable Gate Array), (C)PLD (Complex Programmable Logic Device), ASIC (Application-Specific Integrated Circuit) oder DSP (Digital Signal Processor) implementiert. Solche digitalen Baussteine ermöglichen eine an die Anwendung angepasste Auswertung und eine einfache Erzeugung der benötigten beiden Frequenzen, etwa wenn der Baustein bereits PLLs mit einstellbaren Teilern mitbringt. Wenn alle Elemente zur Signalerzeugung und Signalauswertung auf einem Baustein integriert sind, ergibt dies ein besonders robustes synchrones Design. Dies gilt weitgehend auch dann, wenn zumindest die Elemente der Zeitbasiseinheit integriert sind, die eigentliche Auswertung kann dann auf einem zusätzlichen Baustein stattfinden.

Der Sensor ist bevorzugt als Radarsensor ausgebildet, oder er arbeitet nach dem TDR-Prinzip, wobei eine Monosonde, ein Doppelleiter oder eine Koaxialsonde zur Führung des Signals vorgesehen ist. Beide Prinzipien profitieren von der stabileren und flexibleren erfindungsgemäßen Zeitdehnung.

Der Sensor wird bevorzugt als Füllstandssensor in einem Behälter verwendet, in dem mindestens eine Flüssigkeit oder ein Schüttgut die Grenzfläche bildet, um den Füllstand der Flüssigkeit oder des Schüttgutes zu ermitteln. Dies ist eine besonders häufige Anwendung in der Fabrik- und Prozessautomation.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung eines TDR-Sensors in einer Anwendung als Füllstandssensor;
- Fig. 2: ein Blockschaltbild eines Sensorkopfes mit der Ansteuerung des Sensors gemäß Figur 1;
- Fig. 3: einen vereinfachten beispielhaften Signalverlauf zur Illustration der Zeit- dehnung;
- Fig. 4: eine Darstellung gemäß Figur 3 mit Mehrfachabtastung für eine zusätzliche Zeitdehnung;
- Fig. 5: ein Blockschaltbild einer Ausführungsform der erfindungsgemäßen Zeitba- siseinheit; und
- Fig. 6: ein Diagramm zur Erläuterung der Auskopplung von beliebigen Zeitinter- vallen zwischen Sendezeitpunkten und Abtastzeitpunkten zur Zeitdehnung.

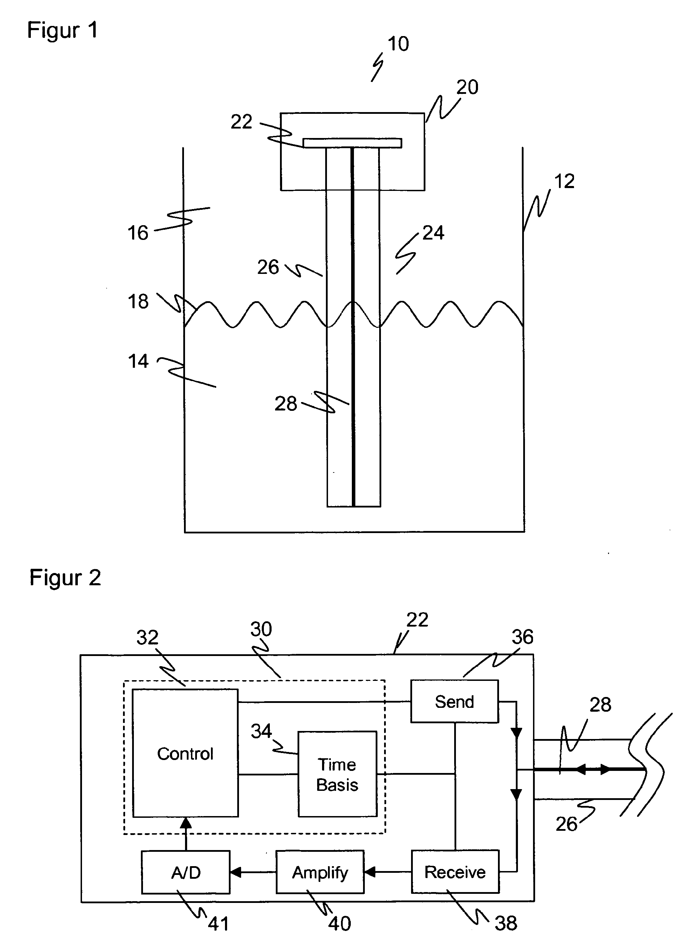

Figur 1 zeigt schematisch einen TDR-Sensor 10, der als Füllstandssensor in einem Tank oder Behälter 12 mit einem Medium oder einer Flüssigkeit 14 angebracht ist. Die Flüssigkeit 14 bildet gegenüber der Luft 16 eine Grenzfläche 18. Der Sensor 10 ist dafür ausgebildet, die Entfernung der Grenzfläche 18 zu ermitteln und daraus aus seiner bekannten Anbringungslage den Füllstand und bei Bedarf anhand der Geometrie des Behälters 12 auch die Menge der Flüssigkeit 14 abzuleiten. Obwohl die Ausbildung des Sensors 10 als Füllstandssensor ein sehr wichtiges Einsatzfeld ist, kann der Sensor 10 prinzipiell auch in anderen Gebieten eingesetzt werden, bei denen eine Grenzfläche zu lokalisieren ist. Dabei ist insbesondere an andere Grenzflächen 18 zu denken, beispielsweise zwischen verschiedenen Flüssigkeiten oder zu und zwischen Schüttgut oder Granulaten, oder an Störstellen in Leitungen.

Der Sensor 10 weist einen Sensorkopf 20 mit einer Steuerung 22 auf, die vorzugsweise auf einer gemeinsamen Platine untergebracht ist. Alternativ sind mehrere über Stecker verbundene Leiterplatten oder Flexprintträger denkbar. An die Steuerung 22 ist eine koaxiale Sonde 24 angeschlossen, welche einen Außenleiter 26 und einen Innenleiter 28 aufweist. Bei einer solchen geschlossenen Sonde 24 werden die elektromagnetischen Signale besonders störungsfrei geführt. Es ist aber auch denkbar, eine andere Sondenform einzusetzen, beispielsweise eine offene Monosonde, die leichter gereinigt werden kann, oder auch gar keine Sonde bei einem Sensor mit Radarprinzip.

Die in dem Sensorkopf 20 vorgesehene Steuerung 22 beziehungsweise ihre Platine ist in Figur 2 in einem Blockschaltbild dargestellt. Die eigentliche Steuerung bildet ein FPGA 30, der auch ein Mikroprozessor, ASIC oder ein ähnlicher digitaler Logikbaustein sowie eine Kombination mehrerer derartiger Bausteine sein kann. Neben der eigentlichen Auswertungslogik 32 ist auf dem FPGA 30 eine Zeitbasiseinheit 34 zur Einstellung von Sende- und Abtastzeitpunkten eines Mikrowellensenders 36 und eines Mikrowellenempfängers 38 implementiert. Alternativ kann die Zeitbasiseinheit 34 einen eigenen Logikbaustein oder Schaltkreis bilden. Mit der Zeitbasiseinheit 34 kann das empfangene Signal zeitgedehnt werden, wie weiter unten noch ausführlich beschrieben.

Über einen Verstärker 40, möglicherweise in manchen Anwendungen sinnvoller als Dämpfungsglied ausgebildet, und einen Analog-Digitalwandler 41 wird das zeitgedehnte Messsignal an die Auswertungslogik 32 zur Messsignalauswertung geleitet. Bevorzugt ist der Verstärker 40 in der Lage, sich auf den Signalpegel einzustellen und somit unter Ausnutzung der Auflösung des A/D-Wandlers 41 auch kleine Messsignale auswerten zu können, beziehungsweise es wird umgekehrt die Sendeleistung angepasst.

Wie auch schon einleitend beschrieben, wird bei einer Messung ein Puls über den Mikrowellensender 36 auf den Innenleiter 28 gegeben und die Laufzeit des an der Grenzfläche 18 entstehenden und in dem Mikrowellenempfänger 38 empfangenen Reflexpulses gemessen, um den Abstand der Grenzfläche 18 und damit den Füllstand in dem Behälter 12 zu ermitteln.

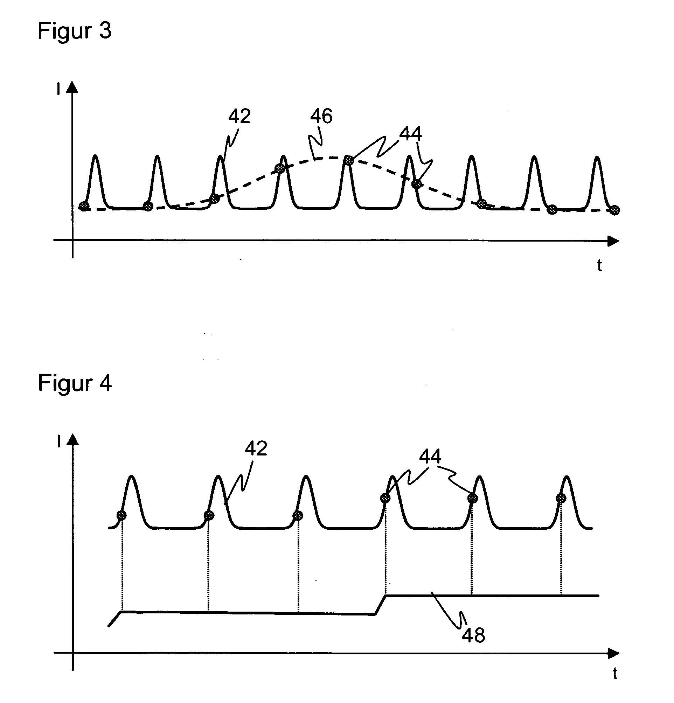

Die Sendepulse und damit auch die Empfangspulse sind extrem kurz und können von einem üblichen A/D-Wandler 41 nicht oder zumindest nicht mit genügend Auflösung abgetastet werden. Mit Bezug auf die Figuren 3 und 4 wird nun erläutert, wie das Empfangssignal mit Hilfe der Zeitbasiseinheit 34 zeitgedehnt wird, damit die Auflösung des A/D-Wandlers für die Digitalisierung ausreicht.

Figur 3 zeigt sehr vereinfacht den Intensitätsverlauf 42 einer Vielzahl von Empfangspulsen, die jeweils auf einen aus einer Serie nacheinander ausgesandter Sendesignale hin empfangen wurden. Jedes Maximum in dem Intensitätsverlauf 42 entspricht dabei einem einzelnen Empfangssignal mit einer Breite von beispielsweise 500 Pikosekunden. Die Abstände zwischen den Maxima sind für die Darstellung deutlich verkürzt, zwischen zwei Sendesignalen sollte zumindest genügend Zeit liegen, damit der Puls die Sonde 24 bis zum Ende des Messbereichs und zurück durchlaufen kann und auch Mehrfachreflexionen abklingen. Ebenso sind auch die Signalformen in der Praxis komplizierter als dargestellt, da sie neben den Empfangspulsen auch noch beispielsweise das Sendesignal selbst, Rauschen und Artefaktpulse von Störungen in der Sonde 24 oder vom Sondenende enthalten.

Da die Abtastzeitpunkte nicht dicht genug liegen können, um einen einzelnen Empfangspuls aufzulösen, wird stattdessen von jedem Empfangspuls nur ein einziger Wert abgetastet. Die jeweilige Stützstelle 44 dieser Abtastung wird aber mit jeder Wiederholung verschoben. Dadurch entsteht ein zeitgedehntes Signal 46, welches die ursprüngliche Signalform eines einzelnen Pulses über ein größeres Zeitintervall wiedergibt. Dabei kann in der praktischen Anwendung zu Recht angenommen werden, dass in den Mikro- oder schlimmstenfalls Millisekunden, die zur Erzeugung einer hinreichenden Anzahl Maxima in dem Intensitätsverlaufs 42 durch wiederholtes Senden und Empfangen des Pulses erforderlich sind, die Situation in dem Behälter 12 hinreichend statisch ist.

Wenn der Zeitdehnungsfaktor groß genug ist, kann bereits das zeitgedehnte Signal 46 von dem Verstärker 40 und dem A/D-Wandler 41 verarbeitet werden. Der Verstärker 40 hat optional auch ein zusätzliches Filter oder selbst Filtereigenschaften, um das an den Stützstellen 44 abgetastete zeitgedehnte Signal 46 zu glätten.

Je nach Wahl der Parameter und Elektronik kann aber auch das zeitgedehnte Signal 46 noch zu hohe Anforderungen an den Verstärker 40 und den A/D-Wandler 41 stellen. Wie in Figur 4 dargestellt, lässt sich eine weitere Zeitdehnung erreichen, indem die Stützstellen 44 mehrfach abgetastet, also erst nach k-facher Wiederholung weiterverschoben werden. Das entstehende Signal 48 stellt dann, wie ein Vergleich zu dem entsprechenden einfach abgetasteten zeitgedehnten Signal 46 der Figuren 3 zeigt, nochmals wesentlich geringere Anforderung an Bandbreite und Frequenz der nachgeordneten Elektronik. Auch das Signal 48 kann noch durch Filter geglättet werden, um sich besser der Form eines einzelnen Empfangspulses in dem Intensitätsverlaufs 42 anzugleichen.

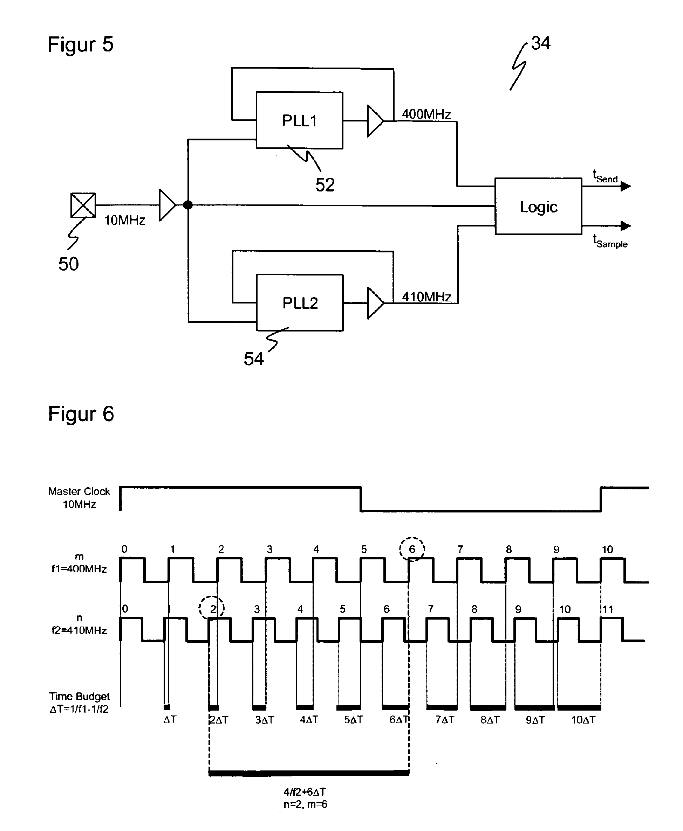

Voraussetzung für die Zeitdehnung ist die stabile Verfügbarkeit der Stützstellen 44. Figur 5 zeigt den Aufbau der Zeitbasiseinheit 34, mit der dies erfindungsgemäß erreicht wird. Aus einem Mastertakt 50 von 10 MHz wird in einer ersten PLL 52 (Phase-locked Loop) und einer zweiten PLL 54 ein Takt abgeleitet, dessen Frequenz von f1=400 MHz bzw. f2=410 MHz dem Vielfachen der Masterfrequenz von 10 MHz des Mastertakts 50 entspricht. Dabei umfassen die PLLs 52, 54 jeweils die üblichen nicht dargestellten zugehörigen Elemente spannungsgesteuerter Oszillator (VCO), Phasendetektor und Schleifenfilter. Die Zeitbasiseinheit 34 erhält die beiden Frequenzen der PLLs 52, 54 sowie zur Synchronisation den Mastertakt 50 selbst. Die Frequenzen werden in der Zeitbasiseinheit 34 so verarbeitet, dass ihre Phasenablage zur reproduzierbaren Erzeugung von Zeitinkrementen genutzt werden kann. Die Zeitbasiseinheit 34 kann vollständig innerhalb des FPGA 30 arbeiten und ist dann besonders einfach implementierbar, kompakt mit der Auswertungslogik 30 integriert und wenig störanfällig.

Der Begriff "Teiler" bezieht sich also auf die Periode, die geteilt wird, die Frequenz als Kehrwert vervielfacht sich dabei. Die Teilung ist ganzzahlig. Selbstverständlich könnte nach demselben Prinzip auch mit nichtganzzahligen Teilern gearbeitet werden, wenn ein Baustein verfügbar ist, der damit stabil umgehen kann.

Eine hohe Regelbandbreite einer PLL erfordert einen kleinen Teilerfaktor in ihrer Rückkoppelschleife. Der Zeitunterschied zwischen den Perioden der beiden Frequenzen f1 und f2 ist ΔT=|1/f1-1/f2|=|(f1-f2)/f1*f2)|. Das erforderliche ΔT lässt sich über das Parsevalsche Theorem oder das Nyquistkriterium ableiten und liegt für eine TDR-Anwendung beispielsweise im Rahmen von 20-100 ps. Dies hängt natürlich von der Pulsbreite ab, anschaulich bedeutet ein ΔT=50ps bei einer Pulsbreite von 500ps, dass in der Größenordnung von 10 Abtastpunkte den Puls beschreiben, womit sich die Pulsform auch für das Auge wie in der Figur 3 erkennbar recht gut wiedergeben lässt.

Um also ΔT klein zu halten, kann einerseits die Differenz f2-f1 und andererseits das Produkt f1*f2 groß gewählt werden. Der einleitend beschriebene herkömmliche Ansatz beschränkt sich darauf, f2-f1 besonders klein zu wählen. Mit der erfindungsgemäßen Zeitbasiseinheit 34 ist ein größeres Produkt f1*f2 möglich, und damit kann auch die Differenz f2-f1 größer werden und weiterhin die Anforderung an ΔT erfüllt bleiben. Die größere Differenzfrequenz f2-f1 bedeutet, dass wesentlich schneller synchronisiert werden kann, um verbleibende Instabilitäten der PLLs 52, 54 auszugleichen, und dass gleiche Phasenlagen in einem deutlich verkürzten Intervall wieder verfügbar sind. Damit werden Mehrfachabtastungen wie in Figur 4, aber auch ganz andere Abtastschemata ermöglicht.

Wie in Figur 6 zu sehen ist, gewinnen die Flanken der beiden unterschiedlichen Frequenzen 400 MHz und 410 MHz zunehmend Abstand voneinander und treffen sich nach einer Periode des Mastertakts 50 von 100ns wieder. Zu diesem Zeitpunkt erfolgt jeweils eine Synchronisation auf die theoretisch zeitgleiche steigende oder fallende Flanke, damit ein etwaiges Auseinanderlaufen der PLLs 52, 54 und des Mastertakts 50 ausgeglichen wird. Figur 6 ist vereinfacht und zeigt nur 10 bzw. 11 Perioden statt der eigentlich erforderlichen 40 bzw. 41 Perioden.

Die PLLs 52, 54 werden bevorzugt von dem FPGA 30 zur Verfügung gestellt. Das FPGA kann auch zusätzliche PLLs aufweisen, beispielsweise insgesamt vier, von denen zunächst für das nachfolgende Verfahren nur zwei genutzt werden. Die weiteren PLLs können aber zum Beispiel als Referenz zum Stabilisieren oder für andere Weiterbildungen eingesetzt werden. Die beiden Frequenzen können aber auch anders als mittels PLLs erzeugt werden, oder durch PLLs, die von dem FPGA 30 unabhängige Schaltungen bilden. Selbstverständlich sind eine von 10 MHz abweichende Masterfrequenz und andere als die beispielhaften Frequenzen f1=400 MHz und f2=410 MHz von der Erfindung umfasst, wobei die Wahl einen Ausgleich zwischen Stabilität der erzeugten abgeleiteten Frequenz und einer möglichst kurzen Differenzperiode finden muss. Zeitraster im Bereich von Pikosekunden und darunter sind durch diese Wahl zumindest prinzipiell erreichbar.

Die Perioden der abgeleiteten Frequenzen f1 und f2 werden in durch diese Frequenzen getriggerten Schieberegistern durchgezählt, so dass der Zeitbasiseinheit 34 oder der Auswertungslogik 30 wie in Figur 6 dargestellt bekannt ist, zu welcher Periode eine Flanke gehört. Zwischen der jeweils i-ten Periode von f1 und f2 bildet sich ein zunehmender Phasenunterschied aus, der nach einer vollen Periode des Mastertakts 50 gerade so groß wird, dass die 41 te Periode von f2 zeitgleich mit der 40ten Periode von f1 zu liegen kommt. Diese Unterschiede stehen in Form von Zeitinkrements oder Zeitbudgets als Vielfache der Differenzperiode ΔT = 1/f1-1/f2 = 60,975 ps zur Verfügung. Dabei wird noch einmal auf die zur vereinfachten Darstellung abweichenden Zahlen 10 und 11 der Figur 6 hingewiesen.

Die Zeitbasiseinheit 34 wählt nun jeweils ein Pärchen aus n-ter Periode der Frequenz f2 und m-ter Periode der Frequenz f1 aus, um beliebige Vielfache der Differenzperiode zu erzeugen. Jedes Pärchen hat relativ zum Mastertakt 50 eine feste Position. Beispielsweise entspricht n=2 und m=6 einem Zeitintervall von 4/f2+6ΔT, wobei 1/f2=41ΔT gilt. Volle Perioden der Mastertakts werden dabei hinzugezählt, um Messperioden länger als 1/10 MHz = 100 ns zu füllen, beispielsweise durch eine übergeordnete, das Timing maskierende Steuereinheit, welche am Mastertakt festgemacht ist. Dabei werden mit jeder Synchronisation nach 100 ns die Zähler zurückgesetzt, so dass die Nummerierung der Pärchen neu beginnt. Sofern die Perioden von f1 und f2 über den Synchronisationszeitpunkt nach 100 ns weitergezählt werden, können alternativ auch die Pärchen unmittelbar Zeitintervalle länger als 100 ns festlegen. Um die Pärchen definiert auskoppeln zu können, sollten die beiden abgeleiteten Frequenzen f1 und f2 eine starre Kopplung zum Mastertakt haben, wie dies durch PLLs gegeben ist.

Mit Hilfe der beiden aus dem Mastertakt 50 abgeleiteten Frequenzen f1 und f2 steht somit für die Sendezeitpunkte und die Abtastzeitpunkte ein Zeitraster mit der durch die Differenzperiode zwischen den beiden Frequenzen f1 und f2 festgelegten Auflösung von 60,975 Pikosekunden zur Verfügung. Dieses Raster kann wie in Figur 3 dazu genutzt werden, um die Stützstellen 44 gleichmäßig zu verschieben, oder um wie in Figur 4 die jeweils gleiche Stützstelle 44 mehrfach abzutasten, oder um Stützstellen 44 in jeder anderen denkbaren Reihenfolge zu wählen.

Zur zusammenfassenden Bewertung kann man abschätzen, dass die Regelbandbreite der PLLs in erster Näherung proportional dem Kehrwert des Teilerfaktors ist. Ein erfindungsgemäß ermöglichter kleiner Teilerfaktor beispielsweise von 40 aus einem hohen gemeinsamen Mastertakt bedeutet deshalb eine ganz erhebliche Erhöhung der Bandbreite um einen Faktor ca. 250 gegenüber herkömmlichen Lösungen, die eines hohen Teilers von 10.000 und mehr bedürfen, um die sehr geringen Differenzperioden ΔT beispielsweise von 10 Hz realisieren zu können. Sowohl Führungseigenschaften wie auch die Störübertragungsfunktion der PLLs sind verbessert, und da die Qualität der Clocksignale eine essentielle Eigenschaft für das Undersamplingverfahren ist, erreicht der Sensors 10 damit eine höhere Messgenauigkeit und bessere Störfestigkeit.

## Patentansprüche

1. Sensor (10), insbesondere Füllstandssensor, mit einem Sender (36) und einem Empfänger (38) zum Aussenden und Empfangen eines elektromagnetischen Signals, insbesondere eines Mikrowellensignals sowie mit einer Steuerung (32), welche dafür ausgebildet ist, die Entfernung einer Grenzfläche (18) anhand der Laufzeit des an der Grenzfläche (18) reflektierten Signals zu bestimmen, indem das Signal wiederholt zu mittels einer ersten Frequenz (f1) festgelegten Sendezeitpunkten ausgesandt und die jeweils empfangenen Signale zu mittels einer zweiten Frequenz (f2) ungleich der ersten Frequenz (f1) festgelegten Abtastzeitpunkten (44) abgetastet werden,
wobei eine Zeitbasiseinheit (34) vorgesehen ist, welche dafür ausgebildet ist, die erste Frequenz (f1) und die zweite Frequenz (f2) mit jeweils einem ganzzahligen Teiler aus einem gemeinsamen Mastertakt (50) abzuleiten, so dass die Differenzfrequenz zwischen der ersten Frequenz (f1) und der zweiten Frequenz (f2) gleich oder ein Vielfaches einer dem Mastertakt (50) entsprechenden Masterfrequenz ist,
**dadurch gekennzeichnet,**
**dass** die Zeitbasiseinheit (34) dafür ausgebildet ist, beliebige zeitliche Verschiebungen zwischen Sendezeitpunkten und Abtastzeitpunkten mit einer durch die Differenzfrequenz gegebenen zeitlichen Auflösung zur Verfügung zu stellen, indem die Zeitbasiseinheit (34) ein Pärchen aus m-ter Periode der ersten Frequenz und n-ter Periode der zweiten Frequenz wählt und auskoppelt.

2. Sensor (10) nach Anspruch 1,
wobei die Zeitbasiseinheit (34) eine erste PLL (52) mit einem ersten Teiler des Mastertaktes für die erste Frequenz (f1) und eine zweite PLL (54) mit einem zweiten Teiler des Mastertaktes (50) für die zweite Frequenz (f2) aufweist, und wobei insbesondere der erste Teiler und der zweite Teiler so gewählt sind, dass eine möglichst kleine Differenzperiode im Bereich einiger hundert, einiger zehn oder einiger Pikosekunden entsteht.

3. Sensor (10) nach Anspruch 1 oder 2,
wobei die Masterfrequenz größer ist als 500 kHz, insbesondere im Bereich von 5 MHz bis 25 MHz liegt, und wobei der erste und der zweite Teiler im Bereich zwischen 2 und 100, insbesondere zwischen 30 und 70 liegen.

4. Sensor (10) nach einem der vorhergehenden Ansprüche,
wobei die Zeitbasiseinheit (34) einen ersten Zähler und einen zweiten Zähler aufweist, um die vollständigen Perioden der ersten Frequenz (f1) beziehungsweise der zweiten Frequenz (f2) zu zählen, wobei die Zähler insbesondere getriggerte Schieberegister aufweisen, und wobei die Zeitbasiseinheit (34) dafür ausgebildet ist, die zeitliche Verschiebung als Zeitintervall zwischen der n-ten Periode der ersten Frequenz (f1) und der m-ten Periode der zweiten Frequenz (f2) zu erzeugen.

5. Sensor (10) nach einem der vorhergehenden Ansprüche,
wobei die Steuerung (32) dafür ausgebildet ist, mehrfach nacheinander das Signal zu einem relativ zum Sendezeitpunkt gleichen Abtastzeitpunkt (44) abzutasten.

6. Sensor (10) nach einem der vorhergehenden Ansprüche,
wobei die Steuerung (32) und/oder die Zeitbasiseinheit (34) auf einem digitalen Logikbaustein (30), insbesondere einem FPGA, PLD, DSP oder ASIC implementiert ist.

7. Sensor (10) nach einem der vorhergehenden Ansprüche,
der als Radarsensor ausgebildet ist, oder der nach dem TDR-Prinzip arbeitet, wobei eine Monosonde, ein Doppelleiter oder eine Koaxialsonde (24) zur Führung des Signals vorgesehen ist.

8. Verwendung eines Sensors (10) nach einem der vorhergehenden Ansprüche als Füllstandssensor in einem Behälter (12), in dem mindestens eine Flüssigkeit (14) oder ein Schüttgut die Grenzfläche (18) bildet, zur Ermittlung des Füllstands der Flüssigkeit (14) oder des Schüttgutes.

9. Verfahren zur Messung der Entfernung zu einer Grenzfläche (18) anhand der Laufzeit eines ausgesandten und an der Grenzfläche (18) reflektierten Signals, insbesondere eines Mikrowellensignals, bei dem das Signal wiederholt zu mittels einer ersten Frequenz (f1) festgelegten Sendezeitpunkten ausgesandt und die jeweils empfangenen Signale zu mittels einer zweiten Frequenz (f2) ungleich der ersten Frequenz festgelegten Abtastzeitpunkten (44) abgetastet werden,
wobei die erste Frequenz (f1) und die zweite Frequenz (f2) mit jeweils einem ganzzahligen Teiler aus einem gemeinsamen Mastertakt (50) abgeleitet werden, so dass die Differenzfrequenz zwischen der ersten Frequenz (f1) und der zweiten Frequenz (f2) gleich oder ein Vielfaches einer dem Mastertakt (50) entsprechenden Masterfrequenz ist,
**dadurch gekennzeichnet,**
**dass** beliebige zeitliche Verschiebungen zwischen Sendezeitpunkten und Abtastzeitpunkten (44) mit einer durch die Differenzfrequenz gegebenen zeitlichen Auflösung eingestellt werden, indem die Zeitbasiseinheit (34) ein Pärchen aus m-ter Periode der ersten Frequenz und n-ter Periode der zweiten Frequenz wählt und auskoppelt.

10. Verfahren nach Anspruch 9,
wobei die erste Frequenz (f1) mit einem ersten Teiler in einer ersten PLL (52) und die zweite Frequenz (f2) mit einer zweiten PLL (54) mit einem zweiten Teiler aus dem Mastertakt (50) abgeleitet wird, wobei insbesondere der erste Teiler und der zweite Teiler so gewählt werden, dass eine möglichst kleine Differenzperiode im Bereich einiger hundert, einiger zehn oder einiger Pikosekunden entsteht.

11. Verfahren nach Anspruch 9 oder 10,
wobei die erste Frequenz (f1) mit der zweiten Frequenz (f2) durch den Mastertakt (50) synchronisiert wird, insbesondere mit jeder Periode des Mastertaktes (50).

12. Verfahren nach einem der Ansprüche 9 bis 11,
wobei vollständige Perioden der ersten Frequenz (f1) beziehungsweise der zweiten Frequenz (f2) gezählt werden und die zeitliche Verschiebung als Zeitintervall zwischen der n-ten Periode der ersten Frequenz (f1) und der m-ten Periode der zweiten Frequenz (f2) erzeugt wird.

13. Verfahren nach einem der Ansprüche 9 bis 12,
wobei das empfangene Signal mehrfach nacheinander zu einem relativ zum Sendezeitpunkt gleichen Abtastzeitpunkt (44) abgetastet wird.

14. Verfahren zur Füllstandsmessung für Flüssigkeiten (14) oder Schüttgüter mittels Radar oder nach dem TDR-Prinzip in einem Verfahren nach einem der Ansprüche 9 bis 13.

## Claims

1. A sensor (10), in particular a filling level measurement sensor, having a transmitter (36) and a receiver (38) for transmitting and receiving an electromagnetic signal, in particular a microwave signal, as well as a control (32) which is configured to determine the distance to an interface (18) by means of a running time of a signal reflected at the interface (18) in that the signal is repeatedly transmitted at predetermined transmission times determined by a first frequency (f1) and that each of the received signals are scanned at predetermined scanning times (44) determined by a second frequency (f2) which is different to the first frequency (f1),
wherein a time base unit (34) is provided which is configured to derive the first frequency (f1) and the second frequency (f2) from a common master clock (50) by means of respective integer divisors, so that the difference frequency between the first frequency (f1) and the second frequency (f2) is the same as or a multiple of a master frequency corresponding the master clock (50),
**characterized in that**
the time base unit (34) is configured to provide arbitrary time shifts between transmission times and scanning times having a time resolution defined by the difference frequency, **in that** the time base unit (34) selects and decouples a pair of frequencies composed of an m-th period of the first frequency and an n-th period of the second frequency.

2. A sensor (10) in accordance with claim 1 wherein the time base unit (34) has a first PLL (52) having a first divisor of the master clock for the first frequency (f1) and a second PLL (54) having a second divisor of the master clock (50) for the second frequency (f2) and wherein, in particular, the first divisor and the second divisor are selected such that an as small as possible difference period in the range of a few hundred picoseconds, a few tens of picoseconds or a few picoseconds arises.

3. A sensor (10) in accordance with claim 1 or claim 2 wherein the master frequency is larger than 500 kHz, in particular lies in the range of 5 MHz to 25 MHz and wherein the first divisor and the second divisor lie in the range between 2 and 100, in particular between 30 and 70.

4. A sensor (10) in accordance with any one of the preceding claims
wherein the time base unit (34) includes a first counter and a second counter to count the complete periods of the first frequency (f1) and the second frequency respectively, wherein the counter includes shift registers in particular triggered shift registers and wherein the time base unit (34) is configured to generate the time shift as a time interval between the n-th period of the first frequency (f1) and the m-th period of the second frequency (f2).

5. A sensor (10) in accordance with any one of the preceding claims
wherein the control (32) is configured to repeatedly and consecutively scan the signal at a same scanning time (44) relative to the transmission time.

6. A sensor (10) in accordance with any one of the preceding claims wherein the control (32) and/or the time base unit (34) are implemented on a digital logic component (30), in particular an FPGA, a PLD, a DSP or an ASIC.

7. A sensor (10) in accordance with any one of the preceding claims which is configured as a radar sensor or works as a sensor which according to the TDR-principle, wherein a mono probe, a dual conductor or a coaxial probe (24) are provided for the guiding of the signal.

8. A use of a sensor (10) in accordance with any one of the preceding claims as a filling level measurement sensor in a container (12), in that at least a fluid (14) or a bulk material forms the interface (18) for the determination of the filling level of the fluid (14) or the bulk material.

9. A method for the measurement of a distance to an interface (18) by means of a running time of a transmitted signal reflected at the interface (18), in particular a microwave signal, in which the signal is repeatedly transmitted at predetermined transmission times determined by a first frequency (f1) and each of the received signals are scanned at predetermined scanning times (44) determined by a second frequency (f2) which is different to the first frequency (f1), wherein the first frequency (f1) and the second frequency (f2) are derived from a common master clock (50) by means of respective integer divisors, so that the difference frequency between the first frequency (f1) and the second frequency (f2) is the same as or a multiple of a master frequency corresponding the master clock (50), **characterized in that** arbitrary time shifts between transmission times and scanning times (44) are set by the difference frequency having a time resolution, **in that** the time base unit (34) selects and decouples a pair of frequencies composed of an m-th period of the first frequency and an n-th period of the second frequency.

10. A method in accordance with claim 9 wherein the first frequency (f1) is derived from the master clock (50) using a first divisor in a first PLL (52) and the second frequency (f2) is derived from the master clock (50) with a second PLL (54) using a second divisor wherein, in particular, the first divisor and the second divisor are selected such that an as small as possible difference period in the range of a few hundred picoseconds, a few ten picoseconds or a few picoseconds arises.

11. A method in accordance with claim 9 or claim 10 wherein the first frequency (f1) is synchronized with the second frequency (f2) using the master clock (50), in particular with each period of the master clock (50).

12. A method in accordance with any one of the claims 9 to 11 wherein complete periods of the first frequency (f1) and/or the second frequency (f2) are counted and the displacement in time is generated as a time interval between the n-th period of the first frequency (f1) and the m-th period of the second frequency (f2).

13. A method in accordance with any one of the claims 9 to 12 wherein the received signal is consecutively repeatedly scanned at a same scanning time (44) relative to a transmission time.

14. A method for the level filling measurement of fluids (14) or bulk material by means of radar or according to the TDR-principle in a method in accordance with any one of the claim 9 to 13.

## Revendications

1. Capteur (10), en particulier capteur de niveau de remplissage, comprenant un émetteur (36) et un récepteur (38) pour émettre et recevoir un signal électromagnétique, en particulier un signal à micro-ondes, et comprenant une commande (32) qui est réalisée pour déterminer l'éloignement d'une surface limite (18) au moyen du temps de parcours du signal réfléchi sur la surface limite (18), en émettant le signal de façon répétée à des instants d'émission fixés au moyen d'une première fréquence (f1) et les signaux respectivement reçus étant palpés à des instants de palpage (44) fixés au moyen d'une seconde fréquence (f2) qui n'est pas égale à la première fréquence (f1),
dans lequel il est prévu une unité formant base temporelle (34) qui est réalisée pour dériver la première fréquence (f1) et la seconde fréquence (f2) avec un diviseur entier à partir d'une cadence maître commune (50), de sorte que la fréquence différentielle entre la première fréquence (f1) et la seconde fréquence (f2) est égale à ou est un multiple d'une fréquence maître correspondant à la cadence maître (50), **caractérisé en ce que** l'unité formant base temporelle (34) est réalisée pour mettre à disposition des décalages temporels quelconques entre les instants d'émission et les instants de palpage avec une résolution temporelle donnée par la fréquence différentielle, **en ce que** l'unité formant base temporelle choisit et découple une paire constituée de la m-ième période de la première fréquence et la n-ième période de la seconde fréquence.

2. Capteur (10) selon la revendication 1,
dans lequel l'unité formant base temporelle (34) comprend un premier circuit PLL (52) avec un premier diviseur de la cadence maître pour la première fréquence (f1) et un second circuit PLL (54) avec un second diviseur de la cadence maître (50) pour la seconde fréquence (f2), et en particulier le premier diviseur et le second diviseur sont ainsi choisis qu'il apparaît une période différentielle aussi faible que possible dans la plage de quelques centaines, quelques dizaines ou quelques picosecondes.

3. Capteur (10) selon la revendication 1 ou 2,
dans lequel la fréquence maître est supérieure à 500 kHz, en particulier dans la plage de 5 MHz à 25 MHz, et le premier et le second diviseur sont dans la plage entre 2 et 100, en particulier entre 30 et 70.

4. Capteur (10) selon l'une des revendications précédentes,
dans lequel l'unité formant base temporelle (34) comprend un premier compteur et un second compteur, afin de compter les périodes entières de la première fréquence (f1) est respectivement de la seconde fréquence (f2), les compteurs comprenant en particulier des registres à décalage déclenchés, et l'unité formant base temporelle (34) est réalisée pour engendrer le décalage temporel sous forme d'un intervalle temporel entre la n-ième période de la première fréquence (f1) et la m-ième période de la seconde fréquence (f2).

5. Capteur (10) selon l'une des revendications précédentes,
dans lequel la commande (32) est réalisé pour palper le signal plusieurs fois les unes après les autres à un instant de palpage (44) égal par rapport à l'instant d'émission.

6. Capteur (10) selon l'une des revendications précédentes,
dans lequel la commande (32) et/ou l'unité formant base temporelle (34) est mise en oeuvre sur un composant logique numérique (30), en particulier FPGA, PLD, DSP ou ASIC.

7. Capteur (10) selon l'une des revendications précédentes,
qui est réalisé sous forme de capteur radar, au qui fonctionne suivant le principe TDR, et dans lequel on prévoit une mono-sonde, un conducteur double ou une sonde coaxiale (24) pour mener le signal.

8. Utilisation d'un capteur (10) selon l'une des revendications précédentes à titre de le capteur de niveau de remplissage dans un récipient (12) dans lequel au moins un liquide (14) ou une matière en vrac forme la surface limite (18), pour déterminer le niveau de remplissage du liquide (14) ou de la matière en vrac.

9. Procédé pour mesurer l'éloignement d'une surface limite (18) au moyen du temps de parcours d'un signal émis et réfléchi au niveau de la surface limite (18), en particulier d'un signal à micro-ondes, dans lequel le signal est émis de façon répétée à des instants d'émission fixés au moyen d'une première fréquence (f1) et les signaux respectivement reçus sont palpés à des instants de palpage (44) fixés au moyen d'une seconde fréquence (f2) qui n'est pas égale à la première fréquence, dans lequel la première fréquence (f1) et la seconde fréquence (s2) sont dérivées respectivement avec un diviseur entier à partir d'une cadence maître commune (50), de sorte que la fréquence différentielle entre la première fréquence (f1) et la seconde fréquence (f2) est égale à ou est un multiple d'une fréquence maître correspondant à la cadence maître (50),
**caractérisé en ce que** l'on établit des décalages temporels quelconques entre les instants d'émission et les instants de palpage (44) avec une résolution temporelle donnée par la fréquence différentielle, **en ce que** l'unité formant base temporelle (34) choisit et découple une paire formée de la m-ième période de la première fréquence et la n-ième période de la seconde fréquence.

10. Procédé selon la revendication 9,
dans lequel la première fréquence (f1) est dérivée avec un premier diviseur dans un premier circuit PLL (52) et la seconde fréquence (f2) est dérivée avec un second diviseur dans un second circuit PLL (54) à partir de la cadence maître (50), et en particulier le premier diviseur et le second diviseur sont ainsi choisis qu'il apparaît une période différentielle aussi petite que possible dans la plage de quelques centaines, quelques dizaines ou quelques picosecondes.

11. Procédé selon la revendication 9 ou 10,
dans lequel la première fréquence (f1) est synchronisée avec la seconde fréquence (f2) au moyen de la cadence maître, en particulier à chaque période de la cadence maître.

12. Procédé selon l'une des revendications 9 à 11,
dans lequel on compte des périodes entières de la première fréquence (f1) ou respectivement de la seconde fréquence (f2), et le décalage temporel est engendré sous forme d'intervalle temporel entre la n-ième période de la première fréquence (f1) et la m-ième période de la seconde fréquence (f2).

13. Procédé selon l'une des revendications 9 à 12,
dans lequel le signal reçu est palpé plusieurs fois les unes après les autres à un instant de palpage (44) égal par rapport à l'instant d'émission.

14. Procédé pour la mesure d'un niveau de remplissage pour des liquides (14) ou pour des matières en vrac au moyen d'un radar ou selon le principe TDR dans un procédé selon l'une des revendications 9 à 13.
